(19) Europäisches Patentamt
European Patent Office
Office européen des brevets

(11) **EP 3 320 461 B1**

(12) **FASCICULE DE BREVET EUROPEEN**

(45) Date de publication et mention
de la délivrance du brevet:
**22.05.2019 Bulletin 2019/21**

(21) Numéro de dépôt: **16741563.7**

(22) Date de dépôt: **07.07.2016**

(51) Int Cl.:
**G06F 17/50** *(2006.01)*

(86) Numéro de dépôt international:
**PCT/EP2016/066206**

(87) Numéro de publication internationale:
**WO 2017/005883 (12.01.2017 Gazette 2017/02)**

(54) **PROCÉDÉ DE SIMULATION DU FONCTIONNEMENT D'UN CIRCUIT ELECTRONIQUE ET PROGRAMME**

SIMULATIONSVERFAHREN DER FUNKTIONSFÄHIGKEIT EINES ELEKTRONISCHEN SCHALTKREISES UND PROGRAMM

SIMULATION METHOD OF THE FUNCTIONALITY OF AN ELECTRONIC CIRCUIT AND PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.07.2015 FR 1556500**

(43) Date de publication de la demande:
**16.05.2018 Bulletin 2018/20**

(73) Titulaires:
• **Sorbonne Université**
**75006 Paris (FR)**
• **Centre National de la Recherche Scientifique (CNRS)**
**75016 Paris (FR)**

(72) Inventeurs:
• **DRON, Wilfried**
**78400 Chatou (FR)**
• **HACHICHA, Khalil**
**75019 Paris (FR)**
• **GARDA, Patrick**
**94320 Thiais (FR)**

(74) Mandataire: **Regimbeau**
**20, rue de Chazelles**
**75847 Paris Cedex 17 (FR)**

(56) Documents cités:
• **WILFRIED DRON ET AL: "A fixed frequency sampling method for wireless sensors power consumption estimation", NEW CIRCUITS AND SYSTEMS CONFERENCE (NEWCAS), 2013 IEEE 11TH INTERNATIONAL, IEEE, 16 juin 2013 (2013-06-16), pages 1-4, XP032447604, DOI: 10.1109/NEWCAS.2013.6573653 ISBN: 978-1-4799-0618-5**
• **Quentin Bramas ET AL: "De la Survié Energétique des Réseaux de Capteurs", , 21 avril 2015 (2015-04-21), pages 1-4, XP055268987, Extrait de l'Internet: URL:https://hal.archives-ouvertes.fr/hal-0 1144309/file/wisebat-algotel2015.pdf [extrait le 2016-04-27]**
• **DRON WILFRIED ET AL: "An Emulation-Based Method for Lifetime Estimation of Wireless Sensor Networks", 2014 IEEE INTERNATIONAL CONFERENCE ON DISTRIBUTED COMPUTING IN SENSOR SYSTEMS, IEEE, 26 mai 2014 (2014-05-26), pages 241-248, XP032613145, DOI: 10.1109/DCOSS.2014.10**
• **JOHANN GLASER ET AL: "Power Aware Simulation Framework for Wireless Sensor Networks and Nodes", EURASIP JOURNAL ON EMBEDDED SYSTEMS, VOLUME 2008, ARTICLE ID 369178, vol. 2008, Article ID 369178, 31 décembre 2008 (2008-12-31), pages 1-16, XP055268994, DOI: 10.155/2008/369178**

**Description**

**DOMAINE DE L'INVENTION**

La présente invention concerne un procédé de simulation du fonctionnement d'un circuit électronique comportant au moins une batterie et un composant électronique fonctionnel. La présente invention s'applique en particulier à la simulation de systèmes embarqués communicants et notamment aux réseaux de capteurs sans fils.

**ETAT DE LA TECHNIQUE**

Il peut être utile de simuler le fonctionnement d'un circuit électronique comportant au moins une batterie notamment pour estimer l'autonomie énergétique d'un circuit électronique, définie comme le temps durant lequel le circuit électronique opère sans défaillances d'une de ses fonctions principales liées à l'épuisement de la batterie qui l'alimente. L'épuisement est considéré ici comme un niveau d'énergie de la batterie insuffisant pour maintenir le système en service.

On connait des simulateurs à simulation continue, où le temps simulé est découpé en pas égaux. À chaque pas de temps, on réévalue tous les paramètres du modèle, y compris à des instants où aucun événement ne se produit, ce qui augmente considérablement le temps de simulation.

On connait des simulateurs à événements discrets, dans lesquels on réévalue les paramètres du modèle uniquement lorsqu'un événement se produit. Un événement est typiquement un changement d'état de fonctionnement d'un composant électronique fonctionnel du circuit. La simulation à événements discrets permet de ne pas réévaluer tous les paramètres du modèle à des instants où ces paramètres varient peu.

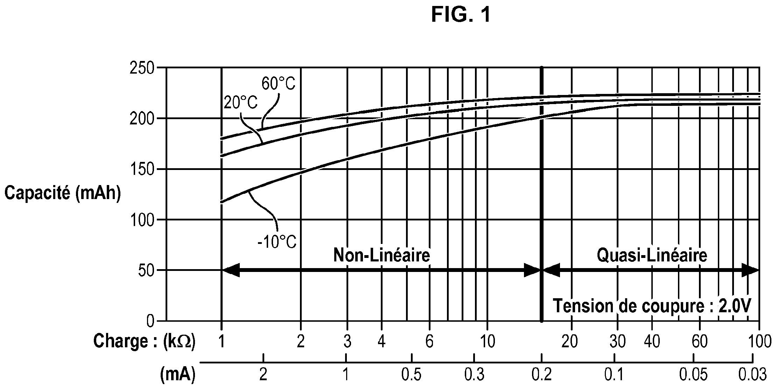

Or, une batterie n'a pas toujours un comportement linéaire. En particulier lorsque le courant délivré par la batterie est supérieur au courant nominal de la batterie, la capacité résiduelle de la batterie varie de manière non linéaire par rapport au courant délivré, comme illustré sur la figure 1.La figure 1 représente la capacité réellement extractible de la batterie CR2032 de Panasonic en fonction du courant consommé par la charge.

Les simulateurs à événements discrets ne permettent généralement pas de prendre en considération les variations rapides des paramètres du modèle en régime de fonctionnement non-linéaire de la batterie.

En effet, si aucun composant électronique fonctionnel ne change d'état de fonctionnement, il n'y a pas d'événement et les paramètres du modèle ne sont pas réévalués. Or, si la batterie est dans sa zone de fonctionnement non-linéaire, les paramètres du système peuvent évoluer très rapidement sans que les paramètres du modèle ne soient réévalués, ce qui peut conduire à des erreurs de simulation importantes.

L'article de W. Dron et al. « A Fixed Frequency Sampling Method for Wireless Sensors Power Consumption Estimation », 11th International New Circuits and Systems Conférence, Juin 2013, pages 1-4 propose un modèle numérique pour simuler et estimer fidèlement la batterie et la consommation énergétique des composants d'un réseaux de capteurs en utilisant un échantillonnage à fréquence fixe.

**EXPOSE DE L'INVENTION**

Un but de l'invention est de proposer un procédé de simulation permettant de simuler de manière précise le fonctionnement non-linéaire d'une batterie et du système qu'elle alimente, tout en limitant le volume de calcul nécessaire. Ce but est atteint dans le cadre de la présente invention grâce à un procédé de simulation du fonctionnement d'un circuit électronique mis en oeuvre par ordinateur, le circuit électronique comportant au moins une batterie et un composant électronique fonctionnel alimenté par la batterie, le circuit électronique étant modélisé par un modèle numérique dans lequel :

- la batterie présente deux états de fonctionnement, incluant un état de fonctionnement quasi-linéaire selon lequel une capacité résiduelle de la batterie varie de manière quasi-linéaire avec l'intensité du courant instantané délivré par la batterie, et un état de fonctionnement non-linéaire selon lequel la capacité résiduelle de la batterie varie de manière non-linéaire avec l'intensité du courant instantané délivré par la batterie,
- le composant électronique fonctionnel présente plusieurs états de fonctionnement, chaque état de fonctionnement correspondant à un courant instantané consommé par le composant électronique,

le procédé comprenant des étapes successives consistant à mettre à jour des paramètres du modèle, les paramètres incluant une capacité résiduelle courante de la batterie $C_R(t)$, un courant instantané délivré $i_{délivré}(t)$ par la batterie, une valeur courante de résistance interne de la batterie, et une tension d'alimentation courante de la batterie $V(t)$, l'étape de mise à jour étant exécutée :

- périodiquement, à intervalle de temps simulé prédéfini lorsque la batterie est en état de fonctionnement non-linéaire, et

- à chaque changement d'état de fonctionnement d'un des composants électroniques fonctionnels, lorsque la batterie est en état de fonctionnement quasi-linéaire.

Le procédé de simulation proposé permet d'ajuster la fréquence des mises à jour des paramètres du modèle en fonction de la précision recherchée. Lorsque la batterie se comporte de manière linéaire, les mises à jour ont lieu uniquement lorsqu'un composant électronique fonctionnel change d'état de fonctionnement. Lorsque la batterie se comporte de manière non-linéaire, les paramètres du modèle sont mis à jour périodiquement, ce qui permet de restituer fidèlement toutes les non-linéarités de la batterie.

Le procédé de simulation proposé permet donc de prendre en compte, d'une part, le structure particulière du circuit électronique considéré impliquant des changements d'état de fonctionnement des composants fonctionnels du circuit électronique, et d'autre part les variations rapides des paramètres du système lorsque la batterie est en régime de fonctionnement non-linéaire.

L'invention est avantageusement complétée par les caractéristiques suivantes, prises individuellement ou en l'une quelconque de leurs combinaisons techniquement possibles.

L'étape de mise à jour est exécutée périodiquement, à intervalles de temps constants, lorsque la batterie est en état de fonctionnement non-linéaire.

L'étape de mise à jour est exécutée périodiquement, à intervalles de temps variables de durée inversement proportionnelle à la valeur du courant instantané délivré $i_{délivré}(t)$, lorsque la batterie est en état de fonctionnement non-linéaire.

Le composant électronique fonctionnel est modélisé par un modèle de composant électronique fonctionnel ayant au moins comme paramètre un courant instantané consommé $i_{consommé}(t)$.

La batterie étant modélisée par un modèle de batterie ayant au moins comme paramètre une tension d'alimentation $V(t)$, un courant instantané délivré $i_{délivré}(t)$, et une capacité résiduelle $C_R(t)$.

Le modèle de composant électronique fonctionnel et le modèle de batterie ont en outre comme paramètre une température du composant et une température de la batterie.

Le procédé de simulation comporte des étapes de :

- comparaison du courant instantané délivré $i_{délivré}(t)$ par la batterie avec une valeur seuil correspondant au courant nominal de la batterie ;
- si le courant instantané délivré $i_{délivré}(t)$ est inférieur au courant nominal de la batterie, les paramètres du modèle sont mis à jour, au cours de l'étape de mise à jour des paramètres du modèle, à l'instant correspondant au prochain changement de mode du composant électronique fonctionnel ;
- si le courant instantané délivré $i_{délivré}(t)$ est supérieur au courant nominal de la batterie, les paramètres du modèle sont mis à jour, au cours de l'étape de mise à jour des paramètres du modèle, à l'instant suivant, distant d'un instant courant du pas de temps.

L'étape de mise à jour des paramètres du modèle (E5, E5") consiste à mettre à jour les paramètres du modèle comportant les sous étapes suivantes :

- mise à jour des valeurs du courant instantané consommé $i_{consommé}(t_i)$ des différents composants fonctionnels en fonction de la précédente valeur de la tension d'alimentation $V(t_{i-1})$ et de l'état courant du composant fonctionnel ;
- mise à jour de la valeur du courant instantané délivré $i_{délivré}(t_i)$ en fonction des valeurs du courant instantané consommé $i_{consommé}(t_i)$ des différents composants fonctionnels ;
- mise à jour de la valeur de la capacité résiduelle $C_R(t_i)$ en fonction de la précédente valeur de la capacité résiduelle $C_R(t_{i-1})$, de la valeur du courant instantané délivré $i_{délivré}(t_i)$ et du temps écoulé $\Delta t$ depuis la dernière mise à jour;
- Mise à jour de la valeur de la résistance interne $r(t_i)$. de la batterie en fonction de la valeur mise à jour de la capacité résiduelle de la batterie $C_R(t_i)$ ;
- mise à jour de la valeur de la tension d'alimentation $V(t_i)$ en fonction de la valeur mise à jour de la capacité résiduelle de la batterie $C_R(t_i)$ et de la valeur mise à jour de la résistance interne de la batterie.

La valeur mise à jour de la capacité résiduelle $C_R(t_i)$ étant calculée selon l'équation :

$$C_R(t_i) = C_R(t_{i-1}) - (i_{eq}(t_i) \times \Delta t) \text{ avec } i_{eq}(t) = \frac{Cnominal}{Ceff(i_{délivré}(t))} \times i_{délivré}(t),$$

avec :

$\Delta t = t_i - t_{i-1}$, avec $t_i$ l'instant de ladite mise à jour et $t_{i-1}$ l'instant de la précédente mise à jour ;
*Cnominal* étant la capacité nominale de la batterie ;
*Ceq(i(t))* étant la capacité effective de la batterie.

Le modèle comprend une fonction de pilotage du temps simulé définissant les états de fonctionnement des composants électroniques fonctionnels et des instants de changement d'états de fonctionnement, depuis le temps de début de la simulation jusqu'à un temps de fin, le procédé comportant en outre une étape (E6), après chaque étape de mise à jour des paramètres (E5, E5'), de mise à jour de la fonction de pilotage du temps.

Les étapes de mise à jour des paramètres du modèle sont répétées jusqu'à ce que la tension aux bornes de la batterie $V(t)$ soit inférieure à une valeur seuil prédéfinie correspondant à la tension de coupure de la batterie, ou que la capacité résiduelle de la batterie $C_R(t)$ soit inférieure à une valeur seuil prédéfinie.

L'invention propose également un procédé de détermination de l'autonomie énergétique d'une batterie dans un circuit électronique comportant au moins une batterie et un composant électronique fonctionnel alimenté par la batterie, consistant à simuler le fonctionnement du circuit électronique, selon un procédé conforme à la revendication 11, l'autonomie énergétique de la batterie étant déterminée comme égale à la durée comprise entre l'instant correspondant au début de la simulation et l'instant correspondant à la fin de la simulation.

L'invention propose également un produit programme d'ordinateur comprenant des instructions de code de programme pour l'exécution des étapes du procédé selon l'une quelconque des revendications 1 à 12 lorsque ledit programme est exécuté sur un ordinateur.

## DESCRIPTION DES FIGURES

D'autres objectifs, caractéristiques et avantages sortiront de la description détaillée qui suit en référence aux dessins donnés à titre illustratif et non limitatif parmi lesquels :

- la figure 1 représente la courbe de décharge d'une batterie, c'est-à-dire sa capacité effective en fonction de la charge ;
- la figure 2a représente schématiquement un modèle d'un composant électronique fonctionnel ;
- la figure 2b représente schématiquement une partie fonctionnelle du modèle de composant électronique fonctionnel ;
- la figure 2c représente schématiquement une partie de simulation de consommation du modèle de composant électronique fonctionnel ;
- la figure 3 représente schématiquement un modèle de batterie ;
- la figure 4 représente schématiquement les différentes étapes du procédé de simulation selon l'invention ;
- la figure 5 illustre un exemple de mise en oeuvre du procédé ;
- la figure 6 représente schématiquement un mode de réalisation de l'invention dans lequel les paramètres sont mis à jour de manière itérative.

## DESCRIPTION DETAILLEE DE L'INVENTION

Dans un procédé de simulation du fonctionnement d'un circuit électronique, le circuit électronique est modélisé par un modèle numérique.

Dans ce modèle numérique, la batterie est modélisée par un modèle de batterie et les composants électroniques fonctionnels par un modèle de composant électronique fonctionnel.

Modèle de composant électronique fonctionnel

Un composant électronique fonctionnel est un composant électronique destiné à être assemblé avec d'autres afin de réaliser une ou plusieurs fonctions électroniques. Les composants forment de très nombreux types et catégories. Ils sont notamment caractérisés par leur fonction et leur consommation.

Pour modéliser au mieux le fonctionnement d'un composant électronique fonctionnel, le modèle de composant électronique fonctionnel inclut, au moins, comme paramètres, un courant instantané consommé $i_{consommé}(t)$, et une tension d'alimentation $V(t)$ du composant.

Les composants électroniques fonctionnels ont plusieurs états de fonctionnement.

A chaque état de fonctionnement correspond une configuration spécifique des éléments intégrés dans le circuit. Il en résulte donc une consommation spécifique à chaque état de fonctionnement.

Pour modéliser ce phénomène, le modèle de composant électronique fonctionnel est défini comme présentant plusieurs états de fonctionnement, chaque état de fonctionnement correspondant à un courant instantané consommé $i_{consommé}(t)$.

Les plus simples des composants peuvent n'avoir que deux états de fonctionnement, l'état actif ou « ON » dans lequel le courant instantané consommé $i_{consommé}(t)$ est non nul, et l'état inactif ou « OFF » dans lequel le courant instantané consommé $i_{consommé}(t)$ est nul.

Les composants plus complexes ont d'autres états de fonctionnement comme l'état de consommation réduite, «Low Power», dans lequel le composant est actif sans exécuter de tâche, et pour lequel le courant instantané consommé $i_{consommé}(t)$ est plus faible que pour l'état actif.

Par exemple, un microcontrôleur à fréquence de fonctionnement variable (fonction connue sous le nom de « Dynamic Voltage Frequency Scaling »), peut fonctionner à différentes fréquences de fonctionnement ayant des consommations différentes. Dans le modèle de microcontrôleur à fréquence de fonctionnement variable, à chaque fréquence de fonctionnement est associé un état de fonctionnement distinct, chaque état de fonctionnement correspondant à une valeur de courant instantané consommé $i_{consommé}(t)$. Ainsi, un microcontrôleur disposant de trois paliers de fréquence f1, f2 et f3, sera modélisé par un modèle de composant fonctionnel à trois états de fonctionnement Actif-f1, Actif-f2 et Actif-f3, chaque état de fonctionnement correspondant à une valeur de courant instantané consommé $i_{consommé}(t)$.

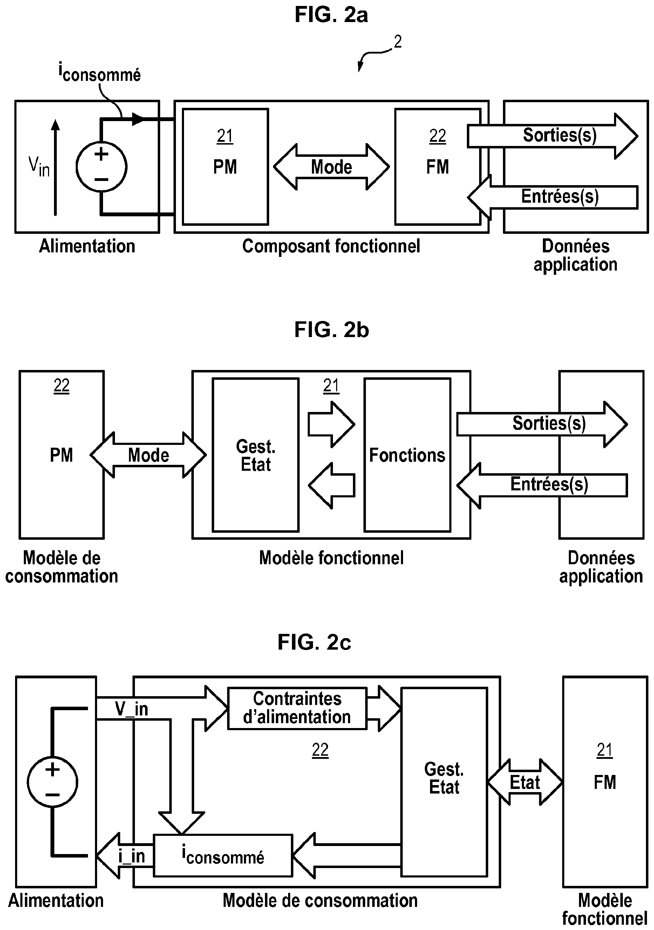

Comme illustré sur la figure 2a, un composant électronique fonctionnel est modélisé par un modèle de composant électronique fonctionnel 2 comportant une partie fonctionnelle 21 modélisant le fonctionnement du composant et une partie de simulation de la consommation 22 modélisant sa consommation et son comportement vis-à-vis de sa tension d'alimentation.

La figure 2b est une représentation schématique de la partie fonctionnelle 21 d'un composant fonctionnel. La partie fonctionnelle du modèle modélise le comportement du composant électronique fonctionnel sur les données qu'il traite ou génère. Ainsi, la partie fonctionnelle du modèle d'un convertisseur analogique numérique consistera, par exemple, à convertir un signal analogique en signal numérique en prenant en considération sa fréquence d'échantillonnage, sa précision, sa résolution et tout autre paramètre significatif et nécessaire au degré de précision souhaité. La manière dont la ou les fonctions du composant sont modélisées dépend de la nature du composant. Les fonctions d'un coeur de microcontrôleur peuvent, par exemple, être reproduites à l'aide d'un émulateur. Une radio ou un convertisseur peuvent être, quant à eux, décrits à l'aide de machines à états. Enfin, la fonction d'un capteur sera décrite à l'aide d'une équation représentant sa loi de conversion. La modélisation du comportement du composant vis-à-vis de ses entrées-sorties est ici appelée fonction.

La gestion des états de fonctionnement du composant peut être représentée par une machine à états ou toute autre représentation décrivant un enchainement d'états et les conditions associées à ces changements.

La figure 2c est une représentation schématique de la partie de simulation de la consommation 22 d'un composant fonctionnel. La partie 22 modélise la consommation du composant en prenant en compte son état de fonctionnement, sa tension d'alimentation et la température.

La partie de simulation de la consommation du modèle simule l'intensité instantanée consommée par le composant.

La partie de simulation de la consommation du modèle d'un convertisseur analogique/numérique reproduit, par exemple, la consommation associée à la conversion d'un signal analogique donné en prenant en considération ses valeurs de consommation dans les conditions de tension d'alimentation et de température données.

Lorsqu'une des parties 21 ou 22 du modèle détecte un changement d'état de fonctionnement, il communique à l'autre partie du modèle le nouvel état de fonctionnement afin d'assurer la synchronisation des deux parties 21 et 22 du modèle. Par exemple, dans le cas où la tension d'alimentation n'est pas suffisante pour garantir le fonctionnement du composant, la partie de simulation de la consommation du modèle 22 transmet l'état fonctionnel inactif à la partie fonctionnelle 21. Dans le cas où la partie fonctionnelle 21 change d'état de fonctionnement, ce nouvel état est transmis à la partie de simulation de la consommation 22 afin qu'elle adopte la valeur de consommation adéquate.

<u>Modèle de batterie</u>

Une batterie, est considérée comme un ensemble d'accumulateurs électriques reliés entre eux de façon à créer un générateur électrique de tension et de capacité désirée.

La capacité d'une batterie est la quantité de charge électrique stockée pour un potentiel électrique donné. Elle est définie comme étant la somme des charges électriques d'un élément divisée par le potentiel de cet élément.

Contrairement aux sources d'alimentation stabilisées ou idéales, les batteries ont une capacité limitée. Cette capacité varie essentiellement en fonction des composés chimiques utilisés dans l'électrolyte (*ex*. : lithium ion, nickel-cadmium, zinc-acide, etc.) et du facteur de forme de la batterie (*ex*. : CR2032, AA, AAA, etc.).

D'une manière générale, la capacité d'une batterie est dite capacité nominale lorsque la batterie est complètement chargée. Lorsque la capacité d'une batterie a déjà été en partie utilisée, la capacité restante est appelée capacité résiduelle ou résiduel. Qu'elle soit nominale ou résiduelle, la capacité d'une batterie est exprimée en A.h ou en W.h.

Par ailleurs, la tension d'alimentation des batteries varie au cours de leur décharge. En effet, plus la batterie se décharge, moins le nombre de charges transférables disponibles sera important. La conséquence directe est que le potentiel électrique de la batterie (qui n'est autre que sa tension d'alimentation) diminuera à mesure que la capacité résiduelle diminue. La façon dont cette tension d'alimentation varie dépend, ici encore, de la structure interne de la batterie.

Par ailleurs, l'intégralité de la capacité nominale d'une batterie n'est pas nécessairement disponible. Considérant une décharge continue, si la valeur du courant consommé par la charge est supérieure à la valeur du courant nominal, alors, toute la capacité de la batterie ne sera pas accessible. La partie accessible de la capacité nominale d'une batterie est nommée capacité effective. La proportion de la capacité accessible dépend du courant instantané débité par la charge, de la température à laquelle se trouve la batterie et, comme précédemment, des caractéristiques intrinsèques de la batterie.

Le courant nominal d'une batterie est défini comme étant le courant au-delà duquel le comportement de la batterie devient non-linéaire.

L'observation des caractéristiques de décharge d'une batterie permet de définir deux modes de fonctionnement principaux (comme illustré sur la figure 1).

La batterie présente un premier état de fonctionnement et un deuxième état de fonctionnement. Le premier état de fonctionnement est qualifié de « quasi-linéaire », par opposition au deuxième état de fonctionnement qui est qualifié de « non-linéaire ». Le qualificatif « quasi-linéaire » signifie seulement que la batterie présente un comportement plus proche d'un comportement linéaire dans l'état de fonctionnement « quasi-linéaire » que dans l'état de fonctionnement « non-linéaire ».

Lorsque le courant instantané fourni par la batterie à la charge est inférieur au courant nominal, la batterie est dans une zone de fonctionnement quasi-linéaire, dans laquelle la capacité résiduelle de la batterie varie de manière quasi-linéaire avec l'intensité du courant instantané délivré par la batterie.

Lorsque le courant instantané fourni par la batterie à la charge est supérieur au courant nominal, la batterie est dans une zone de fonctionnement non-linéaire, dans laquelle la capacité résiduelle de la batterie varie de manière non-linéaire avec l'intensité du courant instantané délivré par la batterie.

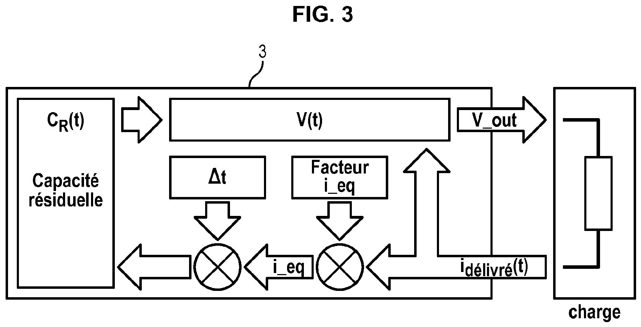

Pour modéliser au mieux le fonctionnement d'une batterie, comme illustré en figure 3, le modèle de la batterie inclut au moins comme paramètre une capacité résiduelle courante de la batterie $C_R(t)$, un courant instantané délivré $i_{délivré}(t)$, et une tension d'alimentation $V(t)$ de la batterie.

En outre, le modèle de batterie présente deux états de fonctionnement, incluant un état de fonctionnement quasi-linéaire selon lequel une capacité résiduelle de la batterie varie de manière quasi-linéaire avec l'intensité du courant instantané délivré par la batterie, et un état de fonctionnement non-linéaire selon lequel la capacité résiduelle de la batterie varie de manière non-linéaire avec l'intensité du courant instantané délivré par la batterie.

Pilotage du temps simulé

Une fonction de pilotage du temps simulé gère l'avancement chronologique du temps simulé, depuis le temps de début de la simulation jusqu'à son temps de fin.

La fonction de pilotage du temps tient à jour en permanence un échéancier ou liste des événements, où les instants des événements futurs sont inscrits.

Un changement d'état de fonctionnement d'un composant fonctionnel est considéré comme un événement.

Pour calculer l'instant de l'événement suivant, il faut chercher l'instant de l'événement le plus proche de l'instant courant.

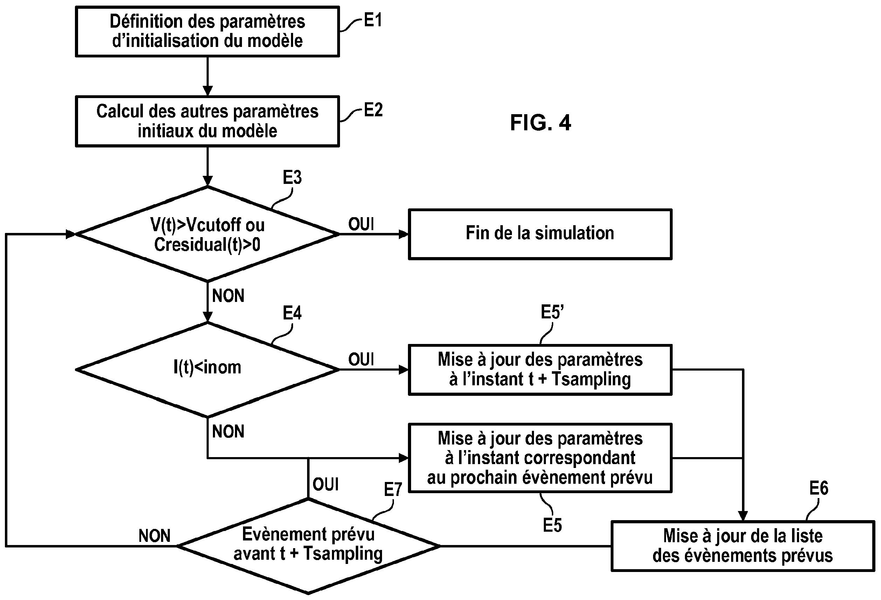

La figure 4 illustre les différentes étapes du procédé de simulation, conforme à un mode de réalisation de l'invention.

Dans une première étape E1, l'utilisateur définit les paramètres d'initialisation du modèle tels que la capacité nominale de la batterie, la tension de coupure de chaque composant, la consommation de chaque composant en fonction de son mode de fonctionnement, etc..

Dans une deuxième étape E2, le simulateur calcule les valeurs des autres paramètres initiaux du modèle à partir des paramètres d'initialisation.

Dans une troisième étape E3, le simulateur vérifie d'une part, si la tension aux bornes de la batterie est inférieure à une valeur seuil prédéfinie correspondant à la tension de coupure, et d'autre part si la capacité résiduelle est inférieure à une valeur seuil prédéfinie qui peut être zéro.

Si l'une de ces conditions est remplie, la simulation s'arrête. La durée comprise entre l'instant correspondant au début de la simulation et l'instant correspondant à la fin de la simulation est égale à l'autonomie énergétique de la batterie.

Si aucune de ces conditions n'est remplie, la simulation continue.

Dans une quatrième étape E4, le simulateur vérifie si le courant délivré par la batterie est supérieur à son courant nominal.

Si le courant instantané est inférieur au courant nominal de la batterie, le procédé de simulation met à jour, au cours d'une étape E5, les paramètres du modèle à l'instant correspondant au prochain changement d'état d'un des composants électronique fonctionnel. A cet effet, la fonction de pilotage recherche l'instant de l'événement le plus proche de l'instant présent sur la liste des événements futurs.

Si le courant instantané est supérieur au courant nominal de la batterie, le procédé de simulation calcule la valeur du pas de temps $T_{sampling}$ au cours de l'étape E5' puis met à jour, au cours d'une étape E5", les paramètres du modèle à l'instant $t + T_{sampling}$, distant de l'instant courant t du pas de temps $T_{sampling}$ (aussi appelé période de rafraichissement).

La valeur du pas de temps $T_{sampling}$ déterminée au cours de l'étape E5' peut être constante ou ajustée en fonction du degré de non linéarité de la batterie. En cas d'ajustement, plus le courant instantané sera grand devant le courant nominal de la batterie, plus le pas de temps $T_{sampling}$ sera faible. Notamment, la durée de l'intervalle de temps peut être inversement proportionnelle à la valeur du courant instantané délivré $i_{déiivré}(t)$, lorsque la batterie est en état de fonctionnement non-linéaire.

Par ailleurs lorsqu'un composant change de mode de fonctionnement, le courant qu'il consomme varie également. Cela entraine une variation de la tension d'alimentation de la batterie qui va entrainer une variation du courant consommé par tous les composants alimentés par la batterie.

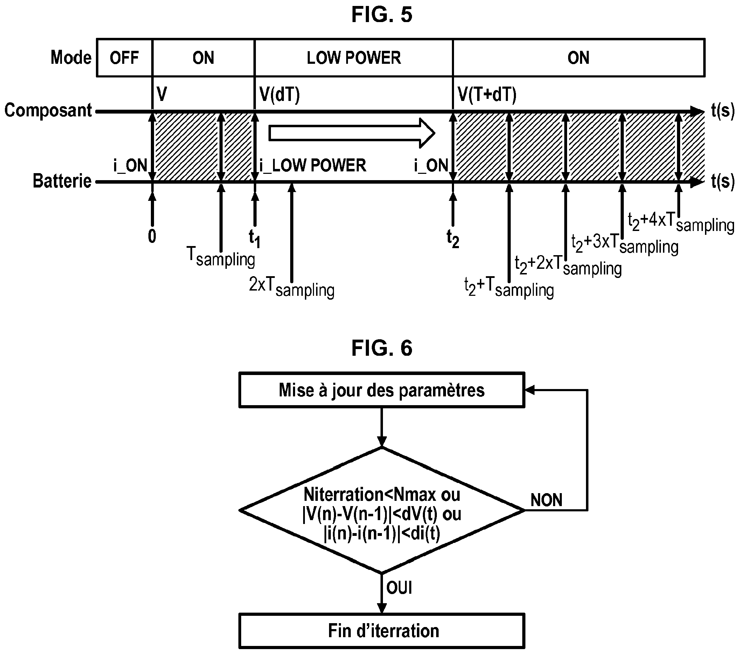

Comme illustré en figure 6, les paramètres du modèle sont alors mis à jour de manière itérative pour faire converger le couple tension d'alimentation de la batterie et courant consommé par le composant.

Les itérations prennent fin lorsqu'une des trois conditions suivantes est remplie : 1) lorsque le nombre d'itérations atteint une valeur Nmax (10 itérations par exemple), 2) lorsque la différence entre deux valeurs de tensions d'alimentation de la batterie calculées pendant deux itérations successives est inférieure à un seuil dV(t) (0.1% de la tension d'alimentation nominale de la batterie par exemple), 3) lorsque la différence entre deux valeurs de courant consommé par le composant, calculées pendant deux itérations successives, est inférieure à un seuil di(t) (0.1% du courant nominal de la batterie par exemple).

Les itérations sont effectuées au cours des étapes E5" et E5.

Dans une étape E7, le simulateur vérifie si le prochain événement est prévu avant l'instant $t + T_{sampling}$ . Si c'est le cas, le procédé de simulation met à jour, au cours d'une étape E5, les paramètres du modèle à l'instant correspondant au prochain changement d'état d'un des composants électronique fonctionnel.

Si le courant instantané est inférieur au courant nominal de la batterie, le procédé de simulation met à jour, au cours d'une étape E5, les paramètres du modèle à l'instant correspondant au prochain changement d'état d'un des composants électronique fonctionnel. A cet effet, la fonction de pilotage recherche l'instant de l'événement le plus proche de l'instant présent sur la liste des événements futurs.

Par conséquent, l'étape de mise à jour est exécutée :

- périodiquement, à intervalle de temps variable ou constant, lorsque la batterie est en état de fonctionnement non-linéaire, la batterie étant en état de fonctionnement non-linéaire lorsque le courant instantané est supérieur au courant nominal de la batterie ; et
- à chaque changement d'état de fonctionnement d'un des composants électroniques fonctionnels, lorsque la batterie est en état de fonctionnement quasi-linéaire, la batterie est en état de fonctionnement quasi-linéaire lorsque le courant instantané est inférieur ou égal au courant nominal de la batterie.

Le procédé permet ainsi d'ajuster la fréquence des mises à jour de la batterie en fonction de la précision nécessitée. Lorsque la batterie se comporte de manière linéaire, les mises à jour ont lieu uniquement lorsqu'un composant change d'état. Dans le cas inverse, si la batterie se comporte de manière non-linéaire, les mises à jour ont lieu dans un intervalle de temps défini par le pas (aussi appelé période de rafraichissement) $T_{sampling}$ afin de restituer fidèlement toutes les non-linéarités de la batterie.

Les étapes E5 et E5' consistant à mettre à jour des paramètres du modèle comportent les sous étapes suivantes :

- mise à jour des valeurs du courant instantané consommé $i_{consommé}(t_i)$ des différents composants fonctionnels en fonction de la précédente valeur de la tension d'alimentation $V(t_{i-1})$ et de l'état courant du composant fonctionnel ;
- mise à jour de la valeur du courant instantané délivré $i_{délivré}(t_i)$ en fonction des valeurs du courant instantané consommé $i_{consommé}(t_i)$ des différents composants fonctionnels ;
- mise à jour de la valeur de la capacité résiduelle $C_R(t_i)$ en fonction de la précédente valeur de la capacité résiduelle $C_R(t_{i-1})$, de la valeur du courant instantané délivré $i_{délivré}(t_i)$ et du temps écoulé $\Delta t$ depuis la dernière mise à jour;
- mise à jour de la valeur de la tension d'alimentation $V(t_i)$ en fonction de la valeur mise à jour de la capacité résiduelle de la batterie $C_R(t_i)$.

La valeur mise à jour de la capacité résiduelle $C_R(t_i)$ est typiquement calculée selon l'équation :

$$C_R(t_i) = C_R(t_{i-1}) - (i_{eq}(t_i) \times \Delta t) \text{ avec } i_{eq}(t) = \frac{Cnominal}{Ceff(i(t))} \times i_{délivré}(t),$$

avec $\Delta t = t_i - t_{i-1}$, avec $t_i$ l'instant de ladite mise à jour et $t_{i-1}$ l'instant de la précédente mise à jour ;

*Cnominal* correspondant à la capacité nominale de la batterie ;

*Ceq(i(t))* correspondant à la capacité effective de la batterie.

La valeur de tension d'alimentation $V(t_i)$ est typiquement calculée selon l'équation :

$$V(t_i) = (Vnominal \times f(C_R(t_i)),$$

avec :

$f$ correspondant à une fonction d'interpolation polynomiale de degré variable, déterminée à partir de la documentation du constructeur de la batterie. Par exemple, pour un pile de type AA, de marque Duracell ®, de modèle MN1500 et de constituants chimique Alcaline Manganèse, cette fonction est définie par la relation suivante :

$$f(C_R(t_i)) = 1,0658 \times C_R(t_i)^3 - 1,877 \times C_R(t_i)^2 + 1,292 \times C_R(t_i) + 0,5066$$

*Vnominal* correspondant à la tension nominale de la batterie.

Comme la résistance interne de la batterie $r(C_R)$ est prise en compte, la tension d'alimentation $V(t)$ est mise à jour en fonction de la nouvelle valeur de la capacité résiduelle $C_R(t)$ et la valeur de l'intensité consommée instantanée $i(t)$, typiquement selon l'équation :

$$V(t_i) = (Vnominal \times f(C_R(t_i)) - (i(t_i) \times r(C_R).$$

La mise à jour des paramètres peut modifier la liste des événements futurs et notamment créer d'autres événements. C'est pourquoi, au cours d'une sixième étape E6, après chaque mise à jour des paramètres, la fonction de pilotage met à jour la liste des événements futurs prévus.

La figure 5 illustre un exemple de mise en oeuvre du procédé, pour un circuit électronique comportant une seule batterie et un seul composant électronique fonctionnel. On suppose que, à l'état actif ON, le courant instantané délivré par la batterie $i_{délivré}(t_i)$ est supérieur au courant nominal, et qu'à l'état veille LOW POWER, le courant instantané délivré par la batterie $i_{délivré}(t_i)$ est nul.

A l'instant 0, le composant électronique fonctionnel passe de l'état inactif OFF à l'état actif ON. Ce changement d'état fonctionnel constitue un événement. Le simulateur met à jour les paramètres du modèle à l'instant 0.

Le composant électronique fonctionnel étant à l'état actif ON, le courant instantané délivré par la batterie $i_{délivré}(t_i)$ est supérieur au courant nominal. La prochaine mise à jour des paramètres se fera donc à l'instant $t=0+T_{sampling}$. A l'instant $t_1$, le composant électronique fonctionnel passe de l'état actif ON à l'état de veille LOW POWER. Ce changement d'état fonctionnel constitue un événement. Le prochain événement est prévu à l'instant $t_1$ antérieur à l'instant $t = 2 * Tsample$. Le simulateur met à jour les paramètres du modèle à l'instant t1.

Le composant électronique fonctionnel étant à l'état de veille LOW POWER, le courant instantané délivré par la batterie $i_{délivré}(t_i)$ est inférieur au courant nominal. Le simulateur met donc à jour les paramètres du modèle à l'instant correspondant au prochaine événement prévu à l'instant $t_2$.

A l'instant $t_2$, le composant électronique fonctionnel passe de l'état de veille LOW POWER à l'état actif ON. Le composant électronique fonctionnel étant à l'état actif ON, le courant instantané délivré par la batterie $i_{délivré}(t_i)$ est supérieur au courant nominal. Le simulateur met donc à jour les paramètres du modèle aux l'instants $t_2 + T_{sampling}$, $t_2 + 2 * T_{sampling}$, $t_2 + 3 * T_{sampling}$,...

Les différentes étapes du procédé sont mises en oeuvre par ordinateur et exécutées au moyen d'instructions de code de programme.

En conséquence, l'invention vise aussi un produit programme d'ordinateur, ce programme étant susceptible d'être mis en oeuvre dans les moyens de traitement ou un système informatique, ce programme comportant des instructions de code adaptées à la mise en oeuvre d'un procédé selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou un autre moyen d'enregistrement. D'autre part, le support d'informations peut être un support transmissible tel qu'un signal électrique ou optique, qui peut être acheminé via un câble électrique ou optique, par radio ou par d'autres moyens. Alternativement, le support d'informations peut être un circuit intégré dans lequel le programme est incorporé, le circuit étant adapté pour exécuter ou pour être utilisé dans l'exécution du procédé en question.

## Revendications

1. Procédé de simulation du fonctionnement d'un circuit électronique mis en oeuvre par ordinateur, le circuit électronique comportant au moins une batterie et au moins un composant électronique fonctionnel alimenté par la batterie, le circuit électronique étant modélisé par un modèle numérique dans lequel :

   - la batterie présente deux états de fonctionnement, incluant un état de fonctionnement quasi-linéaire selon lequel une capacité résiduelle de la batterie varie de manière quasi-linéaire avec l'intensité du courant instantané délivré par la batterie, et un état de fonctionnement non-linéaire selon lequel la capacité résiduelle de la batterie varie de manière non-linéaire avec l'intensité du courant instantané délivré par la batterie,
   - le composant électronique fonctionnel présente plusieurs états de fonctionnement, chaque état de fonctionnement correspondant à un courant instantané consommé par le composant électronique,

   le procédé comprenant des étapes (E5, E5') successives consistant à mettre à jour des paramètres du modèle, les paramètres incluant une capacité résiduelle courante de la batterie $C_R(t)$, un courant instantané délivré $i_{délivré}(t)$ par la batterie, une valeur courante de résistance interne de la batterie, et une tension d'alimentation courante de la batterie $V(t)$, les étapes de mise à jour étant exécutées :

   - répétitivement, à intervalle de temps simulé prédéfini, lorsque la batterie est en état de fonctionnement non-linéaire, et
   - à chaque changement d'état de fonctionnement d'un des composants électroniques fonctionnels, lorsque la batterie est en état de fonctionnement quasi-linéaire.

2. Procédé de simulation selon la revendication 1, les étapes de mise à jour étant exécutées répétitivement, à intervalle de temps constant, lorsque la batterie est en état de fonctionnement non-linéaire.

3. Procédé de simulation selon la revendication 1, les étapes de mise à jour étant exécutées répétitivement, à intervalle de temps variable, la durée de l'intervalle de temps étant inversement proportionnelle à la valeur du courant instantané délivré $i_{délivré}(t)$, lorsque la batterie est en état de fonctionnement non-linéaire.

4. Procédé de simulation selon l'une des revendications précédentes, le composant électronique fonctionnel étant modélisé par un modèle de composant électronique fonctionnel ayant au moins comme paramètre un courant instantané consommé $i_{consommé}(t)$.

5. Procédé de simulation selon l'une des revendications précédentes, la batterie étant modélisée par un modèle de batterie ayant au moins comme paramètre une tension d'alimentation $V(t)$, un courant instantané délivré $i_{délivré}(t)$, et une capacité résiduelle $C_R(t)$.

6. Procédé de simulation selon l'une des revendications précédentes, le modèle de composant électronique fonctionnel et le modèle de batterie ayant en outre comme paramètre une température du composant et une température de la batterie.

7. Procédé de simulation selon l'une des revendications précédentes, comportant des étapes de :

   - (E4) comparaison du courant instantané délivré $i_{délivré}(t)$ par la batterie avec une valeur seuil correspondant au courant nominal de la batterie ;
   - si le courant instantané délivré $i_{délivré}(t)$ est inférieur au courant nominal de la batterie, les paramètres du modèle sont mis à jour, au cours des étapes de mise à jour des paramètres du modèle (E5), à l'instant correspondant au prochain changement de mode du composant électronique fonctionnel ;
- si le courant instantané délivré $i_{délivré}(t)$ est supérieur au courant nominal de la batterie, les paramètres du modèle sont mis à jour, au cours des étapes de mise à jour des paramètres du modèle (E5"), à l'instant suivant, distant d'un instant courant du pas de temps.

8. Procédé de simulation selon l'une des revendications précédentes, les étapes de mise à jour des paramètres du modèle (E5, E5") consistant à mettre à jour les paramètres du modèle comportant les sous étapes suivantes :

   - mise à jour des valeurs du courant instantané consommé $i_{consommé}(t_i)$ des différents composants fonctionnels en fonction de la précédente valeur de la tension d'alimentation $V(t_{i-1})$ et de l'état courant du composant fonctionnel ;
   - mise à jour de la valeur du courant instantané délivré $i_{délivré}(t_i)$ en fonction des valeurs du courant instantané consommé $i_{consommé}(t_i)$ des différents composants fonctionnels ;
   - mise à jour de la valeur de la capacité résiduelle $C_R(t_i)$ en fonction de la précédente valeur de la capacité résiduelle $C_R(t_{i-1})$, de la valeur du courant instantané délivré $i_{délivré}(t_i)$ et du temps écoulé $\Delta t$ depuis la dernière mise à jour;
   - mise à jour de la valeur de la résistance interne $r(t_i)$. de la batterie en fonction de la valeur mise à jour de la capacité résiduelle de la batterie $C_R(t_i)$ ;
   - mise à jour de la valeur de la tension d'alimentation $V(t_i)$ en fonction de la valeur mise à jour de la capacité résiduelle de la batterie $C_R(t_i)$ et de la valeur mise à jour de la résistance interne de la batterie.

9. Procédé de simulation selon la revendication précédente, la valeur mise à jour de la capacité résiduelle $C_R(t_i)$ étant calculée selon l'équation :

$$C_R(t_i) = C_R(t_{i-1}) - (i_{eq}(t_i) \times \Delta t) \text{ avec } i_{eq}(t) = \frac{Cnominal}{Ceff(i_{délivré}(t))} \times i_{délivré}(t),$$

avec :

$\Delta t = t_i - t_{i-1}$, avec $t_i$ l'instant de ladite mise à jour et $t_{i-1}$ l'instant de la précédente mise à jour ;
$Cnominal$ étant la capacité nominale de la batterie ;
$Ceq(i(t))$ étant la capacité effective de la batterie.

10. Procédé de simulation selon l'une des revendications précédentes, le modèle comprenant une fonction de pilotage du temps simulé définissant les états de fonctionnement des composants électroniques fonctionnels et des instants de changement d'états de fonctionnement, depuis le temps de début de la simulation jusqu'à un temps de fin, le procédé comportant en outre une étape (E6), après chaque étape de mise à jour des paramètres (E5, E5'), de mise à jour de la fonction de pilotage du temps.

11. Procédé de simulation selon l'une des revendications précédentes, les étapes (E5, E5') de mise à jour des paramètres du modèle étant répétées jusqu'à ce que la tension aux bornes de la batterie $V(t)$ soit inférieure à une valeur seuil prédéfinie correspondant à la tension de coupure de la batterie, ou que la capacité résiduelle de la batterie $C_R(t)$ soit inférieure à une valeur seuil prédéfinie.

12. Procédé de détermination de l'autonomie énergétique d'une batterie dans un circuit électronique comportant au moins une batterie et un composant électronique fonctionnel alimenté par la batterie, consistant à simuler le fonctionnement du circuit électronique, selon un procédé conforme à la revendication 11, l'autonomie énergétique de la batterie étant déterminée comme égale à la durée comprise entre l'instant correspondant au début de la simulation et l'instant correspondant à la fin de la simulation.

13. Produit programme d'ordinateur comprenant des instructions de code de programme pour l'exécution des étapes du procédé selon l'une quelconque des revendications 1 à 12 lorsque ledit programme est exécuté sur un ordinateur.

**Patentansprüche**

1. Simulationsverfahren des Betriebs eines elektronischen Schaltkreises, umgesetzt durch Rechner, wobei der elektronische Schaltkreis mindestens eine Batterie und mindestens ein funktionelles elektronisches Bauteil aufweist, das von der Batterie versorgt wird, wobei der elektronische Schaltkreis von einem digitalen Modell modelliert wird, wobei:

- die Batterie zwei Betriebszustände aufweist, einschließend einen quasi-linearen Betriebszustand, bei dem eine Restkapazität der Batterie quasi-linear mit der Stärke des von der Batterie bereitgestellten Momentanstroms schwankt, und einen nicht-linearen Betriebszustand, bei dem die Restkapazität der Batterie nicht-linear mit der Stärke des von der Batterie bereitgestellten Momentanstroms schwankt,
- das funktionelle elektronische Bauteil mehrere Betriebszustände aufweist, wobei jeder Betriebszustand einem von dem elektronischen Bauteil verbrauchten Momentanstrom entspricht,

wobei das Verfahren aufeinanderfolgende Schritte (E5, E5') umfasst, die darin bestehen, Parameter des Modells zu aktualisieren, wobei die Parameter eine laufende Restkapazität der Batterie $C_R(t)$, einen von der Batterie bereitgestellten Momentanstrom $i_{bereitgestellt}(t)$, einen laufenden internen Widerstandswert der Batterie und eine laufende Versorgungsspannung der Batterie $V(t)$ einschließen, wobei die Aktualisierungsschritte ausgeführt werden:

- wiederholend, in vorher festgelegtem simuliertem Zeitintervall, wenn die Batterie im nicht-linearen Betriebszustand ist, und
- bei jedem Betriebszustandswechsel eines der funktionellen elektronischen Bauteile, wenn die Batterie im quasi-linearen Betriebszustand ist.

2. Simulationsverfahren nach Anspruch 1, wobei die Aktualisierungsschritte wiederholend in konstantem Zeitintervall ausgeführt werden, wenn die Batterie im nicht-linearen Betriebszustand ist.

3. Simulationsverfahren nach Anspruch 1, wobei die Aktualisierungsschritte wiederholend in variablem Zeitintervall ausgeführt werden, wobei die Dauer des Zeitintervalls umgekehrt proportional zum Wert des bereitgestellten Momentanstroms $i_{bereitgestellt}(t)$ ist, wenn die Batterie im nicht-linearen Betriebszustand ist.

4. Simulationsverfahren nach einem der vorangehenden Ansprüche, wobei das funktionelle elektronische Bauteil von einem Modell des funktionellen elektronischen Bauteils modelliert wird, das als Parameter mindestens einen verbrauchten Momentanstrom $i_{verbraucht}(t)$ hat.

5. Simulationsverfahren nach einem der vorangehenden Ansprüche, wobei die Batterie von einem Batteriemodell modelliert wird, das als Parameter mindestens eine Versorgungsspannung $V(t)$, einen bereitgestellten Momentanstrom $i_{bereitgestellt}(t)$ und eine Restkapazität $C_R(t)$ hat.

6. Simulationsverfahren nach einem der vorangehenden Ansprüche, wobei das Modell des funktionellen elektronischen Bauteils und das Batteriemodell ferner eine Temperatur des Bauteils und eine Temperatur der Batterie als Parameter haben.

7. Simulationsverfahren nach einem der vorangehenden Ansprüche, aufweisend die Schritte:

- (E4) Vergleichen des von der Batterie bereitgestellten Momentanstroms $i_{bereitgestellt}(t)$ mit einem Grenzwert, der dem Nominalstrom der Batterie entspricht;
- wenn der bereitgestellte Momentanstrom $i_{bereitgestellt}(t)$ kleiner als der Nominalstrom der Batterie ist, werden die Parameter des Modells während der Aktualisierungsschritte der Parameter des Modells (E5) in dem Moment aktualisiert, der dem nächste Moduswechsel des funktionellen elektronischen Bauteils entspricht;
- wenn der bereitgestellte Momentanstrom $i_{bereitgestellt}(t)$ größer als der Nominalstrom der Batterie ist, werden die Parameter des Modells während der Aktualisierungsschritte der Parameter des Modells (E5") im nächsten Moment, der um einen laufenden Moment des Zeitintervall beabstandet ist, aktualisiert.

8. Simulationsverfahren nach einem der vorangehenden Ansprüche, wobei die Aktualisierungsschritte der Parameter des Modells (E5, E5") darin bestehen, die Parameter des Modells zu aktualisieren, aufweisend die folgenden Unterschritte:

- Aktualisieren der Werte des von den verschiedenen funktionellen Bauteilen verbrauchten Momentanstroms $i_{verbraucht}(t)$ in Abhängigkeit von dem vorangehenden Wert der Versorgungsspannung $V(t_{i-1})$ und dem laufenden Zustand des funktionellen Bauteils;
- Aktualisieren des Werts des bereitgestellten Momentanstroms $i_{bereitgestellt}(t)$ in Abhängigkeit von den Werten des von den verschiedenen funktionellen Bauteilen verbrauchten Momentanstroms $i_{vertraucht}(t)$ ;

- Aktualisieren des Werts der Restkapazität $C_R(t_i)$ in Abhängigkeit vom vorangehenden Wert der Restkapazität $C_R(t_{i-1})$, vom Wert des bereitgestellten Momentanstrom $i_{bereitgestellt}(t)$ und von der seit der letzten Aktualisierung abgelaufenen Zeit $\Delta t$;
- Aktualisieren des internen Widerstandswerts $r(t_i)$ der Batterie in Abhängigkeit vom Aktualisierungswert der Restkapazität der Batterie $C_R(t_i)$;
- Aktualisieren des Werts der Versorgungsspannung $V(t_i)$ in Abhängigkeit vom Aktualisierungswert der Restkapazität der Batterie $C_R(t_i)$ und vom Aktualisierungswert des internen Widerstands der Batterie.

9. Simulationsverfahren nach vorangehendem Anspruch, wobei der Aktualisierungswert der Restkapazität $C_R(t_i)$ berechnet wird gemäß der Gleichung:

$$C_R(t_i) = C_R(t_{i-1}) - \left(i_{eq}(t_i) \times \nabla t\right) \; mit \; i_{eq}(t) = \frac{Cnominal}{Ceff\left(i_{bereitgestellt}(t)\right)} \times i_{bereitgestellt}(t),$$

mit $\nabla t = t_i - t_{i-1}$, mit $t_i$ als Moment der Aktualisierung und $t_{i-1}$ als Moment der vorangegangenen Aktualisierung;
wobei *Cnominal* die nominale Kapazität der Batterie ist;
wobei *Ceq(i(t))* die tatsächliche Kapazität der Batterie ist.

10. Simulationsverfahren nach einem der vorangehenden Ansprüche, wobei das Modell eine Steuerfunktion der simulierten Zeit umfasst, die die Betriebszustände der funktionellen elektronischen Bauteile und der Änderungsmomente von Betriebszuständen ab der Zeit des Beginns der Simulation bis zu einer Endzeit definiert, wobei das Verfahrens ferner nach jedem Aktualisierungsschritt der Parameter (E5, E5') einen Aktualisierungsschritt der Steuerfunktion der Zeit aufweist.

11. Simulationsverfahren nach einem der vorangehenden Ansprüche, wobei die Aktualisierungsschritte (E5, E5') der Parameter des Modells wiederholt werden, bis die Spannung an den Klemmen der Batterie $V(t)$ kleiner als ein vorher festgelegter Grenzwert ist, der der Trennspannung der Batterie entspricht, oder die Restkapazität der Batterie $C_R(t)$ kleiner als ein vorher festgelegter Grenzwert ist.

12. Verfahren zum Bestimmen der energetischen Autonomie einer Batterie in einem elektronischen Schaltkreis, aufweisend mindestens eine Batterie und ein von der Batterie versorgtes funktionelles elektronisches Bauteil, das darin besteht, den Betrieb des elektronischen Schaltkreises nach einem Verfahren nach Anspruch 11 zu simulieren, wobei die energetische Autonomie der Batterie als gleich der Dauer bestimmt ist, die zwischen dem Moment, der dem Beginn der Simulation entspricht, und dem Moment, der dem Ende der Simulation entspricht, liegt.

13. Rechnerprogrammprodukt, umfassend Codebefehle für die Ausführung der Schritte des Verfahrens nach einem der Ansprüche 1 bis 12, wenn das Programm auf einem Rechner ausgeführt wird.

**Claims**

1. A method of simulating the operation of an electronic circuit implemented by computer, the electronic circuit comprising at least one battery and at least one functional electronic component powered by the battery, the electronic circuit being modelled by a numerical model wherein:

- the battery has two operating states, including a quasi-linear operating state in which a residual capacity of the battery varies quasi-linearly with the intensity of the instantaneous current delivered by the battery, and a non-linear operating state in which the residual capacity of the battery varies non-linearly with the intensity of the instantaneous current delivered by the battery,
- the functional electronic component has several operating states, each operating state corresponding to an instantaneous current consumed by the electronic component,

the method comprising successive steps (E5, E5') consisting of updating parameters of the model, the parameters including a current residual capacity of the battery $C_R(t)$, an instantaneous current $i_{delivered}(t)$ delivered by the battery, a current value of battery internal resistance and a current powering voltage of the battery $V(t)$, the updating steps being executed:

- repetitively at a predefined simulated time interval, when the battery is in the non-linear operating state, and
- at each change in operating state of one of the functional electronic components, when the battery is in the quasi-linear operating state.

2. The simulation method according to claim 1, the updating steps being executed repetitively at constant time interval when the battery is in the non-linear operating state.

3. The simulation method according to claim 1, the updating steps being executed repetitively at variable time interval, the duration of the time interval being inversely proportional to the value of the delivered instantaneous current $i_{delivered}(t)$, when the battery is in the non-linear operating state.

4. The simulation method according to one of the preceding claims, the functional electronic component being modelled by a functional electronic component model having as parameters at least a consumed instantaneous current $i_{consumed}(t)$.

5. The simulation method according to one of the preceding claims, the battery being modelled by a battery model having at least a powering voltage $V(t)$, a delivered instantaneous current $i_{delivered}(t)$, and residual capacity $C_R(t)$ as parameters.

6. The simulation method according to one of the preceding claims, the functional electronic component model and the battery model further having a component temperature and a battery temperature as parameters.

7. The simulation method according to one of the preceding claims, comprising steps of:

- (E4) comparison of the instantaneous current $i_{delivered}(t)$ delivered by the battery, with a threshold value corresponding to the nominal current of the battery;
- if the delivered instantaneous current $i_{delivered}(t)$ is smaller than the nominal current of the battery, the parameters of the model are updated at the steps of updating the parameters of the model (E5), at the time corresponding to the next change in mode of the functional electronic component;
- if the delivered instantaneous current $i_{delivered}(t)$ is greater than the nominal current of the battery, the parameters of the model are updated at the steps of updating the parameters of the model (E5"), at the next time remote from a current time, of the time interval.

8. The simulation method according to one of the preceding claims, the steps of updating the parameters of the model (E5, E5") consisting of updating the parameters of the model including the following substeps:

- updating the values of the consumed instantaneous current $i_{consumed}(t_i)$ of the different functional components as a function of the preceding value of the powering voltage $V(t_{i-1})$ and of the current state of the functional component;
- updating the value of the delivered instantaneous current $i_{delivered}(t_i)$ as a function of the values of the consumed instantaneous current $i_{consumed}(t_i)$ of the different functional components;
- updating the value of the residual capacity $C_R(t_i)$ as a function of the preceding value of the residual capacity $C_R(t_{i-1})$, of the value of the delivered instantaneous current $i_{delivered}(t_i)$ and of the lapsed time $\Delta t$ since the last update;
- updating the value of the internal resistance $r(t_i)$ of the battery as a function of the updated value of the residual capacity of the battery $C_R(t_i)$ ;
- updating the value of the powering voltage $V(t_i)$ as a function of the updated value of the residual capacity of the battery $C_R(t_i)$ and of the updated value of the internal resistance of the battery.

9. The simulation method according to the preceding claim, the updated value of the residual capacity $C_R(t_i)$ being calculated using the equation:

$$C_R(t_i) = C_R(t_{i-1}) - (i_{eq}(t_i) \times \Delta t) \text{ with } \quad i_{eq}(t) = \frac{Cnominal}{Ceff(i_{delivered}(t))} \times$$

$$i_{delivered}(t),$$

with: $\Delta t = t_i - t_{i-1}$, with $t_i$ being the time of said update and $t_{i-1}$ being the time of the previous update;
*Cnominal* being the nominal capacity of the battery;
*Ceq*($i$($t$)) being the effective capacity of the battery.

10. The simulation method according to one of the preceding claims, the model comprising a piloting function of simulated time defining the operating states of the functional electronic components and times of change in operating states, from the starting time of simulation up until an end time, the method further comprising a step (E6), after each parameter (E5, E5') updating step, of updating the time piloting function.

11. The simulation method according to one of the preceding claims, the steps (E5, E5') of updating the parameters of the model being repeated until the voltage at the terminals of the battery $V(t)$ is lower than a predefined threshold value corresponding to the cut-off voltage of the battery, or until the residual capacity of the battery $C_R(t)$ is lower than a predefined threshold value.

12. A method for determining the energy self-sufficiency of a battery in an electronic circuit comprising at least one battery and a functional electronic component powered by the battery, consisting of simulating the operation of the electronic circuit with a method according to claim 11, the energy self-sufficiency of the battery being determined as being equal to the duration of time between the time corresponding to the starting of simulation and the time corresponding to the end of simulation.

13. A computer program product comprising program code instructions for executing the steps of the method according to any of claims 1 to 12 when said program is executed on a computer.

FIG. 1

EP 3 320 461 B1

## FIG. 2a

## FIG. 2b

## FIG. 2c

**FIG. 3**

FIG. 4

Définition des paramètres d'initialisation du modèle (E1)

Calcul des autres paramètres initiaux du modèle (E2)

V(t)>Vcutoff ou Cresidual(t)>0 (E3) — OUI → Fin de la simulation

NON

I(t)<inom (E4) — OUI → Mise à jour des paramètres à l'instant t + Tsampling (E5')

NON

Evènement prévu avant t + Tsampling (E7) — OUI → Mise à jour des paramètres à l'instant correspondant au prochain évènement prévu (E5)

NON

Mise à jour de la liste des évènements prévus (E6)

## FIG. 5

| Mode | OFF | ON | LOW POWER | ON |
|------|-----|-----|-----------|-----|

Composant $\qquad$ V $\qquad$ V(dT) $\qquad$ V(T+dT) $\qquad$ t(s)

Batterie

i_ON $\qquad$ i_LOW POWER $\qquad$ i_ON $\qquad$ t(s)

0 $\qquad$ $T_{sampling}$ $\qquad$ $t_1$ $\qquad$ $2 \times T_{sampling}$ $\qquad$ $t_2$ $\qquad$ $t_2+T_{sampling}$ $\qquad$ $t_2+2 \times T_{sampling}$ $\qquad$ $t_2+3 \times T_{sampling}$ $\qquad$ $t_2+4 \times T_{sampling}$

## FIG. 6

Mise à jour des paramètres

Niterration<Nmax ou
|V(n)-V(n-1)|<dV(t) ou
|i(n)-i(n-1)|<di(t)

NON

OUI

Fin d'iterration

EP 3 320 461 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **W. DRON et al.** A Fixed Frequency Sampling Method for Wireless Sensors Power Consumption Estimation. *11th International New Circuits and Systems Conférence,* Juin 2013, 1-4